# EUROPÄISCHE PATENTSCHRIFT

(11) **EP 2 885 651 B1**
(45) Veröffentlichungstag und Bekanntmachung des Hinweises auf die Patenterteilung: **03.03.2021**
(21) Anmeldenummer: 13742202.8
(22) Anmeldetag: 24.07.2013
(51) Int. Cl.: G01S 7/52

(54) **System mit einer Basis- oder Ladestation für einen Roboter und mit einem eine Umfeldsensoreinrichtung aufweisenden Roboter und Verfahren zum Überprüfen einer Umfeldsensoreinrichtung eines Roboters**
System with a base or charging base for a robot and with a robot comprising an environment sensor device and method for checking an environment sensor device of a robot
Système avec une station de base ou de chargement d'un robot et avec un robot comprenant un dispositif capteur d'environnement et procédé de vérification d'un dispositif capteur d'un robot

(30) Priorität: 17.08.2012 DE 102012214657
(43) Veröffentlichungstag der Anmeldung: 24.06.2015
(73) Patentinhaber: Robert Bosch GmbH, 70442 Stuttgart (DE)
(72) Erfinder: HAUG, Florian, 70499 Stuttgart (DE); GERLACH, Andre, 71229 Leonberg-Hoefingen (DE); BROWN, Christopher, 70193 Stuttgart (DE)
(86) Internationale Anmeldenummer: PCT/EP2013/065603
(87) Internationale Veröffentlichungsnummer: WO 2014/026835

(56) Entgegenhaltungen:
- CH-A5- 612 026
- DE-A1- 2 934 187
- DE-A1- 3 807 383
- DE-C1- 19 707 591
- US-A- 4 868 797
- YATA T ET AL: "Wall following using angle information measured by a single ultrasonic transducer", PROCEEDINGS OF THE 1998 IEEE INTERNATIONAL CONFERENCE ON ROBOTICS AND AUTOMATION, Bd. 2, 16. Mai 1998 (1998-05-16), - 20. Mai 1998 (1998-05-20), Seiten 1590-1596, XP002714534, LEUVEN, BELGIUM DOI: 10.1109/ROBOT.1998.677372 ISBN: 0-7803-4300-X in der Anmeldung erwähnt

## Beschreibung

Die Erfindung betrifft ein Verfahren zum Überprüfen einer Umfeldsensoreinrichtung, eine Referenzschallquelle und eine entsprechende Umfeldsensoreinrichtung.

### Stand der Technik

Die DE 40 235 38 A1 beschreibt eine Kollisionswarneinrichtung, insbesondere zur Vermeidung von Kollisionen mit stehenden Hindernissen im Nahbereich eines Kraftfahrzeugs, mit einer Einrichtung zur berührungslosen Abstandsmessung, wobei bei der Kollisionswarneinrichtung mindestens zwei Ultraschallsensoren in einem vorgegebenen Abstand angeordnet sind.

Bei der dort beschriebenen Einrichtung ist eine Auswertung der Laufzeiten zwischen dem Aussenden jeweils eines Ultraschallsignals und dem Empfangen eines reflektierten Ultraschallsignals vorgesehen, wobei das Ultraschallsignal des jeweils gleichen und des jeweils anderen Ultraschallsensors verwendet wird.

Die Druckschrift mit dem Titel "Fast Bearing Measurement with a Single Ultrasonic Transducer" von T. Yata, L. Kleeman und S. Yuta erschienen im International Journal of Robotics Research, Ausgabe 17, Nummer 11, auf den Seiten 1202-1213 erschienen im Jahr 1998 beschreibt ein Verfahren und eine Vorrichtung zur Ultraschall-Abtastung. Bei dem dort beschriebenen Verfahren wird zur Extraktion von Informationen ein einziger Ultraschallwandler verwendet, welcher in einem Ultraschall-Puls-Echo-Erkennungsmodus betrieben wird.

Die FR 281 797 3 A1 beschreibt ein Verfahren zum Erfassen der Position von Objekten zur Unterstützung beim Einparken eines Kraftfahrzeugs, wobei das Verfahren unter Verwendung eines Netzes von Ultraschall-Sensoren am Kraftfahrzeug durchgeführt wird.

Aus der DE 2 934 187 A1 ist eine Vorrichtung zur automatischen Kalibrierung von Ultraschallentfernungsmessern bekannt, bei der eine Einrichtung zum Bestimmen einer Referenzlaufzeit vorgesehen ist, die die Laufzeit von von einem Ultraschallsender ausgesendeten Ultraschallwellen nach Durchlaufen einer bekannten, konstanten Referenzstrecke feststellt und die festgestellt Referenzlaufzeit zum Bewerten der Arbeitsmessstrecke ausnutzt.

Die DE 3 807 383 A1 offenbart einen berührungslos arbeitenden Ultraschallsensor nach dem Impuls-Echo-Laufzeit-Verfahren, wobei über zusätzlich angebrachte Referenz-Empfänger- und Sender-Schall-Wandler die Funktion des Gerätes permanent kontrolliert wird, wobei die Ausführung so gewählt ist, dass die Eignung zum Zwecke des Personenschutzes gegeben ist.

Die US 4,868,797 A offenbart ein Ultraschallentfernungsmesser, der einen Füllstand einer Flüssigkeit in einem Behältnis messen kann, wobei der Entfernungsmesser oberhalb der Flüssigkeitsoberfläche an einer festen Position angebracht ist.

### Offenbarung der Erfindung

Die vorliegende Erfindung schafft ein System mit einer Basis- oder Ladestation für einen Roboter und mit einem eine Umfeldsensoreinrichtung aufweisenden Roboter gemäß Anspruch 1 und ein Verfahren zum Überprüfen einer Umfeldsensoreinrichtung eines Roboters gemäß Anspruch 6.

### Vorteile der Erfindung

Die Idee der Erfindung liegt darin, dass durch die Verwendung einer Referenzschallquelle oder eines Referenzrückstreukörpers eine Systemüberwachung und -kalibrierung für die Umfeldsensoreinrichtung durchgeführt werden kann.

Im Vergleich zu einer Eigendiagnostik, die elektrische Signale einspeist, kann so das gesamte System in die Systemüberwachung und -kalibrierung einbezogen werden. Durch die Schallmessung können alle Empfangswandler inklusive der Verstärker und Analog-Digital-Wandler-Kanäle der Sende- und/oder Empfangseinrichtung überprüft und kalibriert werden.

Vorteilhafte Ausführungsformen und Weiterbildungen ergeben sich aus den Unteransprüchen sowie aus der Beschreibung unter Bezugnahme auf die Figuren.

Gemäß einer Ausführungsform der Erfindung ist vorgesehen, dass das Kalibrieren der Umfeldsensoreinrichtung ein Kalibrieren der Empfängereinrichtung der Umfeldsensoreinrichtung umfasst. Dies erlaubt eine einfache und sichere Überprüfung der Empfängereinrichtung.

Gemäß einer Ausführungsform der Erfindung ist vorgesehen, dass das Kalibrieren der Umfeldsensoreinrichtung ein Kalibrieren der Rechnereinrichtung der Umfeldsensoreinrichtung umfasst. Dies erlaubt eine einfache und sichere Überprüfung der Rechnereinrichtung.

Gemäß einer Ausführungsform der Erfindung ist vorgesehen, dass das Kalibrieren der Umfeldsensoreinrichtung ein Ermitteln einer Position der Referenzschallquelle umfasst. Dadurch kann direkt die Funktion der Umfeldsensoreinrichtung überprüft werden. Gemäß einer Ausführungsform der Erfindung ist vorgesehen, dass als die Referenzschallquelle ein Rückstreukörper verwendet wird und auf die Referenzschallquelle ein Schallsignal von einer Sendereinrichtung der Umfeldsensoreinrichtung ausgesendet wird. Die Verwendung eines Referenzrückstreukörpers hat gegenüber einer Referenzschallquelle den Vorteil, dass es sich dabei um einen preiswerten und einfachen passiven Körper handelt sowie dass der Schallsender der Umfeldsensoreinrichtung die Überprüfung mit einbezogen wird.

Gemäß einer Ausführungsform der Erfindung ist vorgesehen, dass als das Referenzschallsignal ein harmonisches Schallsignal, ein Burst-Signal, ein Sweep-Signal oder ein Impuls-Signal verwendet wird.

Gemäß einer Ausführungsform der Erfindung ist vorgesehen, dass eine Mehrzahl von Referenzschallsignalen in unterschiedlichen Ausprägungen und/oder in zeitlicher Abfolge verwendet wird.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Umfeldsensoreinrichtung gemäß einer Ausführungsform der Erfindung; und
- Fig. 2: eine schematische Darstellung eines Flussdiagramms eines Verfahrens zum Überprüfen einer Umfeldsensoreinrichtung gemäß noch einer weiteren Ausführungsform der Erfindung.

In den Figuren der Zeichnung bezeichnen gleiche Bezugszeichen gleiche oder funktionsgleiche Elemente, Bauteile, Komponenten oder Verfahrensschritte, soweit nichts Gegenteiliges angegeben ist.

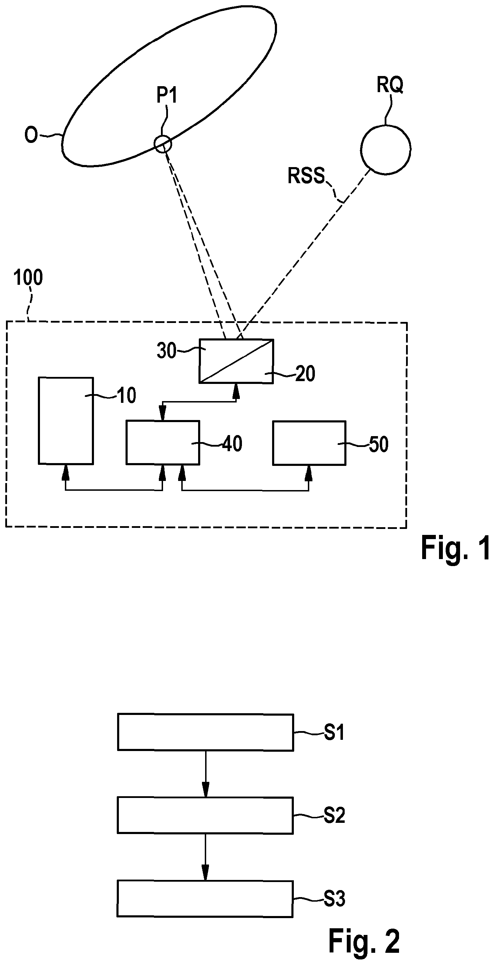

Die Figur 1 zeigt eine schematische Darstellung einer Umfeldsensoreinrichtung gemäß einer Ausführungsform der Erfindung

Eine Umfeldsensoreinrichtung 100 umfasst eine Speichereinrichtung 10, eine Empfängereinrichtung 20, eine Sendereinrichtung 30 und eine Rechnereinrichtung 40.

Die Empfängereinrichtung 20 ist dazu ausgelegt, ein von einer Referenzschallquelle RQ ausgesendetes Referenzschallsignal RSS zu erfassen. Die Sendereinrichtung 30 ist beispielsweise dazu ausgelegt, elektrische Signale der Rechnereinrichtung 40 in Schall umzuwandeln und auszusenden.

Die Speichereinrichtung 10 ist dazu ausgelegt, Betriebsdaten zu der Umfeldsensoreinrichtung 100 bereitzustellen. Die Betriebsdaten können dabei Daten zu der zuletzt vorgenommen Kalibrierung bzw. Überprüfung der Umfeldsensoreinrichtung 100 umfassen. Ferner können die in der Speichereinrichtung 10 gespeicherten Betriebsdaten auch Daten bezüglich einer beim Kalibrieren der Umfeldsensoreinrichtung 100 zu bestimmenden Position der Referenzschallquelle RQ umfassen.

Die Rechnereinrichtung 40 ist dazu ausgelegt, die Umfeldsensoreinrichtung 100 anhand des erfassten Referenzschallsignals RSS zu kalibrieren und dadurch zu überprüfen.

Die Empfängereinrichtung 20, die Speichereinrichtung 10 und die Rechnereinrichtung 40 sind beispielsweise als netzwerkmäßig verbundene Rechnereinheiten ausgeführt.

Die Rechnereinrichtung 40 und die Speichereinrichtung 10 ist sind beispielsweise als eine Prozessoreinheit oder als eine sonstige elektronische Datenverarbeitungseinheit ausgebildet.

Eine Anzeigeneinrichtung 50 der Umfeldsensoreinrichtung 100 ist beispielsweise mit der Rechnereinrichtung 40 gekoppelt und ist zum Anzeigen der Funktion der Umfeldsensoreinrichtung 100 vorgesehen.

Die Anzeigeneinrichtung 50 kann als eine Flüssigkristallanzeige oder als ein Flüssigkristallbildschirm ausgebildet sein, dessen Funktion darauf beruht, dass Flüssigkristalle die Polarisationsrichtung von Licht beeinflussen, wenn ein bestimmtes Maß an elektrischer Spannung angelegt wird.

Die Empfängereinrichtung 20 ist beispielsweise als ein Mikrofon oder als ein piezoelektrischer Schallwandler oder als ein sonstiger Schallwandler ausgebildet, der Luftschall als Schallwechseldruckschwingungen in entsprechende elektrische Spannungsänderungen als Mikrofonsignal umwandelt.

Die Sendereinrichtung 30 ist beispielsweise als ein elektrodynamischer Lautsprecher mit zentralem Antrieb oder als ein piezoelektrischer Schallwandler oder als ein elektrostatischer Lautsprecher oder als ein ferroelektrischer Lautsprecher oder als ein elektromagnetischer Lautsprecher oder als ein sonstiger Lautsprecher ausgebildet.

Die Rechnereinrichtung 40 ist beispielsweise als ein Mikrocontroller, auch µController, ausgebildet, welcher neben einem Prozessor auch Einheiten für Peripheriefunktionen auf einem Chip vereint.

Die Umfeldsensoreinrichtung 100 kann über eine von der Rechnereinrichtung 40 gemessene Laufzeit des Schallpulses die Entfernung eines Reflexionspunktes P1 an einem Objekt O bestimmen.

Optional kann durch die Umfeldsensoreinrichtung 100 die Ortsbestimmung des Reflexionspunktes P1 des Objektes O über eine Methode basierend auf einer Frequenzverschiebung oder auf einer Trilatertion vorgenommen werden, wobei mittels mehrere räumlich distanzierter Empfängereinrichtungen 20 und/oder mehrere räumlich distanzierter Sendereinrichtungen 30 die Richtung und die vollständigen Raum-Koordinaten des Reflexionspunktes P1 bestimmt werden.

Die maximale Laufzeit eines Schallpulses im Umfeld wird als Burstlaufzeit der Umfeldsensoreinrichtung 100 bezeichnet und bestimmt die maximale Reichweite für eine Objektdetektion der Umfeldsensoreinrichtung 100.

Die Referenzschallquelle RQ oder der Rückstreukörper können einfach in die Basis- oder Ladestation eines die Umfeldsensoreinrichtung 100 aufweisenden Roboters integriert werden. Der Rückstreukörper kann ein festes Material, wie etwa Metall oder Kunststoff aufweisen, und mit definierter Geometrie, wie etwa in Kugel- oder Zylinderform oder als ein Tripel-Spiegel, ausgebildet sein. Die Ultraschall-basierte Umfeldsensoreinrichtung 100 benutzt dabei die integrierte Sendereinrichtung 30 zum Anstrahlen des Rückstreukörpers.

Sofern die Referenzschallquelle RQ oder der Referenzrückstreukörper für eine Systemüberwachung und -kalibrierung zu nah an der Umfeldsensoreinrichtung positioniert ist, kann der mit der Umfeldsensoreinrichtung 100 ausgestattete Roboter eine definierte Strecke fahren, um sich von der Basis- oder Ladestation zu entfernen.

Die Umfeldsensoreinrichtung 100 und die Referenzschallquelle RQ sind geeignet für Ultraschall basierte Anwendungen, die Richtungsinformationen verarbeiten und Array-Anordnungen verwenden, wie etwa eine Umfeldsensierung für Roboter, auch für autonom arbeitende Rasenmäher, Staubsauger, Transportroboter oder sonstige fahrende Roboter.

Die Figur 2 zeigt eine schematische Darstellung eines Flussdiagramms eines Verfahrens zum Überprüfen einer Umfeldsensoreinrichtung gemäß noch einer weiteren Ausführungsform der Erfindung.

Als ein erster Verfahrensschritt erfolgt ein Aussenden S1 eines Referenzschallsignals RSS durch eine Referenzschallquelle RQ.

Das Referenzschallsignal RSS kann als eine begrenzte Anzahl von Schwingungen fixer Frequenz mit einer bestimmten Dauer ausgebildet sein. Ebenso kann das Referenzschallsignal RSS als ein harmonisches Schallsignal, als ein Burst-Signal, als ein Sweep-Signal oder als ein Impuls-Signal ausgebildet sein. Als Sweep-Signal kann dabei ein periodisches Signal zum Einsatz kommen, das in einer definierten Zeit seine Frequenz von einem Startwert zu einem Endwert hin ändert.

Als ein zweiter Verfahrensschritt erfolgt ein Erfassen S2 des Referenzschallsignal RSS durch eine Empfängereinrichtung 20 der Umfeldsensoreinrichtung 100.

Als ein dritter Verfahrensschritt erfolgt ein Kalibrieren S3 der Umfeldsensoreinrichtung 100 durch eine Rechnereinrichtung 40 der Umfeldsensoreinrichtung 100 anhand des erfassten Referenzschallsignals RSS zum Überprüfen der Umfeldsensoreinrichtung 100.

Die einzelnen Verfahrensschritte des Verfahrens zum Überprüfen einer Umfeldsensoreinrichtung können dabei in beliebiger Weise, etwa iterativ oder rekursiv, wiederholt werden.

## Patentansprüche

1. System mit einer Basis- oder Ladestation für einen Roboter und mit einem eine Umfeldsensoreinrichtung (100) aufweisenden Roboter, wobei die Umfeldsensoreinrichtung (100) eine Empfängereinrichtung (20) aufweist, welche dazu ausgelegt ist, ein Referenzschallsignal (RSS) zu erfassen, und wobei die Umfeldsensoreinrichtung (100) eine Rechnereinrichtung (40) aufweist, welche dazu ausgelegt ist, die Umfeldsensoreinrichtung (100) anhand des erfassten Referenzschallsignals (RSS) zu kalibrieren und dadurch zu überprüfen,
**dadurch gekennzeichnet, dass** eine Referenzschallquelle (RQ) zum Aussenden des Referenzschallsignals (RSS) in die Basis- oder Ladestation integriert ist.

2. System nach Anspruch 1, **dadurch gekennzeichnet, dass** die Referenzschallquelle (RQ) als ein Rückstreukörper für ein durch die Rechnereinrichtung (40) als elektrisches Signal ausgegebenes und von einer Sendereinrichtung (30) der Umfeldsensoreinrichtung (100) in Schall umgewandeltes und ausgesendetes Schallsignal ausgebildet ist.

3. System nach Anspruch 2, **dadurch gekennzeichnet, dass** der Rückstreukörper in einer Kugel- oder Zylinderform oder als ein Tripel-Spiegel ausgebildet ist.

4. System nach einem der vorhergehenden Ansprüche, **dadurch gekennzeichnet, dass** das Referenzschallsignal (RSS) ein harmonisches Schallsignal, ein Burst-Signal, ein Sweep-Signal oder ein Impuls-Signal ist.

5. System nach einem der vorhergehenden Ansprüche, **dadurch gekennzeichnet, dass** eine Mehrzahl von Referenzschallsignalen (RSS) in unterschiedlichen Ausprägungen und/oder in zeitlicher Abfolge verwendet wird.

6. Verfahren zum Überprüfen einer Umfeldsensoreinrichtung (100) eines Roboters mit folgenden Verfahrensschritten:
- Aussenden (S1) eines Referenzschallsignals (RSS) durch eine in eine Basis- oder Ladestation des Roboters integrierte Referenzschallquelle (RQ);
- Erfassen (S2) des Referenzschallsignals (RSS) durch eine Empfängereinrichtung (20) der Umfeldsensoreinrichtung (100); und
- Kalibrieren (S3) der Umfeldsensoreinrichtung (100) durch eine Rechnereinrichtung (40) der Umfeldsensoreinrichtung (100) anhand des erfassten Referenzschallsignals zum Überprüfen der Umfeldsensoreinrichtung (100).

7. Verfahren nach Anspruch 6, **dadurch gekennzeichnet, dass** das Kalibrieren der Umfeldsensoreinrichtung (100) ein Kalibrieren der Empfängereinrichtung (20) der Umfeldsensoreinrichtung (100) umfasst.

8. Verfahren nach einem der Ansprüche 6-7, **dadurch gekennzeichnet, dass** das Kalibrieren der Umfeldsensoreinrichtung (100) ein Kalibrieren der Rechnereinrichtung (40) der Umfeldsensoreinrichtung (100) umfasst.

9. Verfahren nach einem der Ansprüche 6-8, **dadurch gekennzeichnet, dass** das Kalibrieren der Umfeldsensoreinrichtung (100) ein Ermitteln einer Position der Referenzschallquelle (RQ) umfasst.

## Claims

1. System having a base or charging station for a robot and having a robot which has an environmental sensor device (100), wherein the environmental sensor device (100) has a receiver device (20) which is designed to capture a reference sound signal (RSS), and wherein the environmental sensor device (100) has a computer device (40) which is designed to calibrate the environmental sensor device (100) on the basis of the captured reference sound signal (RSS) and to check it thereby, **characterized in that** a reference sound source (RQ) for emitting the reference sound signal (RSS) is integrated in the base or charging station.

2. System according to Claim 1, **characterized in that** the reference sound source (RQ) is in the form of a backscattering body for a sound signal which is output by the computer device (40) as an electrical signal and is converted into sound by a transmitter device (30) of the environmental sensor device (100) and is emitted.

3. System according to Claim 2, **characterized in that** the backscattering body is in in the form of a sphere or cylinder or is designed as a triple mirror.

4. System according to one of the preceding claims, **characterized in that** the reference sound signal (RSS) is a harmonic sound signal, a burst signal, a sweep signal or a pulse signal.

5. System according to one of the preceding claims, **characterized in that** a plurality of reference sound signals (RSS) are used in different forms and/or in a temporal sequence.

6. Method for checking an environmental sensor device (100) of a robot, having the following method steps of:
- emitting (S1) a reference sound signal (RSS) by means of a reference sound source (RQ) integrated in a base or charging station of the robot;
- capturing (S2) the reference sound signal (RSS) by means of a receiver device (20) of the environmental sensor device (100); and
- calibrating (S3) the environmental sensor device (100) by means of a computer device (40) of the environmental sensor device (100) on the basis of the captured reference signal in order to check the environmental sensor device (100).

7. Method according to Claim 6, **characterized in that** the calibration of the environmental sensor device (100) comprises calibrating the receiver device (20) of the environmental sensor device (100).

8. Method according to one of Claims 6-7, **characterized in that** the calibration of the environmental sensor device (100) comprises calibrating the computer device (40) of the environmental sensor device (100).

9. Method according to one of Claims 6-8, **characterized in that** the calibration of the environmental sensor device (100) comprises determining a position of the reference sound source (RQ).

## Revendications

1. Système, comprenant une station de base ou de chargement destinée à un robot, et un robot présentant un dispositif capteur d'environnement (100), le dispositif capteur d'environnement (100) présentant un dispositif récepteur (20) qui est conçu pour détecter un signal sonore de référence (RSS), et le dispositif capteur d'environnement (100) présentant un dispositif informatique (40) qui est conçu pour étalonner et ainsi contrôler le dispositif capteur d'environnement (100) à l'aide du signal sonore de référence (RSS) détecté, **caractérisé en ce qu'**une source sonore de référence (RQ) destinée à émettre le signal sonore de référence (RSS) est intégrée dans la station de base ou de chargement.

2. Système selon la revendication 1, **caractérisé en ce que** la source sonore de référence (RQ) est réalisée sous la forme d'un rétrodiffuseur pour un signal sonore émis par le dispositif informatique (40) sous forme de signal électrique et converti en son et émis par un dispositif émetteur (30) du dispositif capteur d'environnement (100).

3. Système selon la revendication 2, **caractérisé en ce que** le rétrodiffuseur est réalisé sous la forme d'une sphère ou d'un cylindre ou d'un miroir trièdre.

4. Système selon l'une quelconque des revendications précédentes, **caractérisé en ce que** le signal sonore de référence (RSS) est un signal sonore harmonique, un signal en rafale, un signal de balayage ou un signal d'impulsion.

5. Système selon l'une quelconque des revendications précédentes, **caractérisé en ce qu'**une pluralité de signaux sonores de référence (RSS) sont utilisés sous différentes formes et/ou dans un ordre chronologique.

6. Procédé de vérification d'un dispositif capteur d'environnement (100) d'un robot, comprenant les étapes de procédé suivantes consistant à :
- émettre (S1) un signal sonore de référence (RSS) par une source sonore de référence (RQ) intégrée dans une station de base ou de chargement du robot ;
- détecter (S2) le signal sonore de référence (RSS) par un dispositif récepteur (20) du dispositif capteur d'environnement (100) ; et
- étalonner (S3) le dispositif capteur d'environnement (100) au moyen d'un dispositif informatique (40) du dispositif capteur d'environnement (100) à l'aide du signal sonore de référence détecté pour contrôler le dispositif capteur d'environnement (100) .

7. Procédé selon la revendication 6, **caractérisé en ce que** l'étalonnage du dispositif capteur d'environnement (100) comprend un étalonnage du dispositif récepteur (20) du dispositif capteur d'environnement (100).

8. Procédé selon l'une quelconque des revendications 6 et 7, **caractérisé en ce que** l'étalonnage du dispositif capteur d'environnement (100) comprend un étalonnage du dispositif informatique (40) du dispositif capteur d'environnement (100).

9. Procédé selon l'une quelconque des revendications 6 à 8, **caractérisé en ce que** l'étalonnage du dispositif capteur d'environnement (100) comprend une détermination d'une position de la source sonore de référence (RQ).
